# EUROPÄISCHE PATENTSCHRIFT

(11) **EP 1 297 942 B1**
(45) Veröffentlichungstag und Bekanntmachung des Hinweises auf die Patenterteilung: **22.02.2006**
(21) Anmeldenummer: 02018445.3
(22) Anmeldetag: 16.08.2002
(51) Int. Cl.: B29C 49/42, B29C 49/36

(54) **Vorrichtung zur Handhabung von streckgeblasenen Behältern mittels Übergaberad, wobei ein Halteelement relativ drehbar zum Tragarm angeordnet ist und über eine Steuerkurve verstellbar ist**
Apparatus for handling strech-blow-moulded containers using a conveying wheel, whereby a gripping element is relatively rotatable to a carrier arm and controlled by a cam
Dispositif pour la manipulation de récipients moulés par étirage soufflage utilisant une roue de transfert, où un moyen de retenue est orientable par rapport à un bras de support et contrôlé par une came

(30) Priorität: 19.09.2001 DE 10146232
(43) Veröffentlichungstag der Anmeldung: 02.04.2003
(73) Patentinhaber: SIG Corpoplast GmbH & Co. KG, 22145 Hamburg (DE)
(72) Erfinder: Vogel, Klaus, 22885 Barsbüttel (DE); Benda, Uwe, 24558 Henstedt-Ulzburg (DE); Schulz, Wolfgang, 23858 Reinfeld (DE)
(74) Vertreter: Klickow, Hans-Henning

(56) Entgegenhaltungen:
- DE-A- 3 837 118
- DE-A- 10 005 687
- DE-A- 19 906 308
- DE-A- 19 906 366
- DE-A- 19 906 439
- DE-A1- 19 532 092
- US-A- 4 355 968
- US-A- 5 116 217
- US-A- 5 863 571

## Beschreibung

Die Erfindung betrifft eine Vorrichtung zur Handhabung von Behältern, die ein rotationsfähiges Übergaberad aufweist, das mindestens einen relativ zu einem Mittelpunkt des Übergaberades im wesentlichen radial angeordneten Tragarm aufweist, der mit einem Halteelement für die Behälter versehen ist und bei der daß das Halteelement relativ zum Tragarm um eine Drehachse herum drehbeweglich angeordnet ist, sowie bei der das Halteelement mit einem Positionierelement verbunden ist, das von einer Kurvensteuerung verstellbar ist.

Derartige Vorrichtungen werden insbesondere bei der Herstellung von blasgeformten Behältern eingesetzt, um eine Übergabe von geblasenen Behältern von einer Arbeitsstation zu einer anderen Arbeitsstation mit hoher Übergabegeschwindigkeit durchführen zu können. Beispielsweise ist ein derartiges Übergaberad zwischen einem rotierenden Blasrad und einer Ausgabestrecke angeordnet.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Überwiegend werden bei der Blasverformung Behälter mit einer im wesentlichen rotationssymmetrischen Gestaltung oder zumindest mit einer wenigstens näherungsweise kreisartigen Querschnittkontur hergestellt. In zunehmendem Maße werden jedoch auch Behälter hergestellt, die eine Querschnittkontur aufweisen, die deutlich von einer Kreisform abweicht. Insbesondere kleinere Behälter werden in zunehmend größeren Stückzahlen mit einer stark ovalartig ausgeprägten Querschnittkontur produziert.

Bei Behältern, die eine entsprechend deutlich von einer Kreiskontur abweichende Querschnittkontur aufweisen, besteht häufig die Anforderung, daß eine exakt räumlich definierte Anordnung der Behälter bei der Durchführung von Übergaben vorliegen muß. Darüber hinaus kann im Bereich unterschiedlicher Bearbeitungsstationen eine unterschiedliche räumliche Orientierung zweckmäßig sein. Dies macht es erforderlich, bei der Übergabe des Behälters von einer Arbeitsstation zu einer weiteren Arbeitsstation eine Veränderung der räumlichen Positionierung des Behälters vorzunehmen. Die bislang bekannten Vorrichtungen sind nicht in ausreichender weise dafür geeignet, entsprechende Positionierungen des Behälters sowohl mit einer hohen Genauigkeit als auch mit hoher Geschwindigkeit sowie großer Zuverlässigkeit durchführen zu können.

Aus der US-A 5,863,571 ist es bekannt, gleichzeitig zwei Flaschen zu greifen und die Greifeinrichtung gemeinsam mit den Flaschen um eine Drehachse zu verschwenken. Die Längsachsen der Flaschen sowie die Drehachse des Greifelementes weisen hierbei relativ zueinander einen Abstand auf.

Aus der DE 38 37 118 A ist es bekannt, ein Übergaberad für Vorformlinge und Flaschen mit Tragarmen zu versehen, die relativ zum Übergaberad sowohl verschwenkbar als auch teleskopierbar angeordnet sind.

In der DE 199 06 308 A werden ebenfalls verschwenkbar im Bereich eines Übergaberades angeordnete Tragarme beschrieben.

Aus der DE 199 06 439 A ist es bekannt, eine Blasstation mit relativ zu Formträgern verschwenkbar angeordneten Blasformhälften zu verwenden und ein Recksystem mit einer schlittenartigen Führung für die Reckstange zu versehen.

Aufgabe der vorliegenden Erfindung ist es, eine Vorrichtung der einleitend genannten Art derart zu konstruieren, daß bei der Durchführung einer Übergabe eine Positionierung des Behälters unterstützt wird.

Diese Aufgabe wird erfindungsgemäß dadurch gelöst, daß die Drehachse im wesentlichen in Richtung einer Behälterlängsachse eines vom Halteelement getragenen Behälters angeordnet ist, daß ein mit dem Tragarm verbundenes Sockelelement als Schlitten entlang einer Führung verschieblich ist und daß das Sockelelement mit einer Kurvensteuerung gekoppelt ist.

Durch die drehbewegliche Anordnung des Halteelementes relativ zum Tragarm ist es möglich, eine Drehung des Behälters um seine Längsachse herum während des Übergabevorganges und mit einer hohen Geschwindigkeit durchführen zu können. Die Fixierung des Behälters im Bereich des Halteelementes sorgt für eine hohe Genauigkeit bei der Durchführung der Drehbewegung sowie für eine hohe Reproduzierfähigkeit. Durch die Verwendung der Kurvensteuerung wird ebenfalls eine hohe Reproduktionsgenauigkeit bei einer gleichzeitig hohen Handhabungsgeschwindigkeit und hoher Positioniergenauigkeit unterstützt. Die Anordnung der Drehachse in Richtung der Behälterlängsachse ermöglich es, eine jeweils optimale Anordnung der Funktionsbauelemente im Bereich der einzelnen Arbeitsstationen vornehmen zu können, ohne diese Funktionselemente an eine fest vorgegebene räumliche Orientierung der Behälter anpassen zu müssen.

Eine kompakte Ausbildung wird dadurch unterstützt, daß die Kurvensteuerung relativ zu einer Anordnung des Halteelementes bezüglich der Mittellinie radial innenliegend angeordnet ist.

Eine mechanisch zuverlässige Realisierung wird dadurch unterstützt, daß die Kurvensteuerung mindestens eine Führungsrolle umfaßt, die in eine Kurvenbahn eingreift.

Eine Übertragung der Positionierbewegungen kann dadurch erfolgen, daß die Kurvenrolle mit einer Rolle verbunden ist, die drehbar im Bereich des Tragarmes gelagert ist.

Insbesondere ist daran gedacht, daß das Positionierelement eine Rolle aufweist.

Eine mechanische Kopplung der zu bewegenden Bauelemente kann dadurch erfolgen, daß die Rolle des Positionierelementes über eine Welle mit dem Halteelement gekoppelt ist.

Zur Ermöglichung einer räumlich voneinander getrennten Anordnung der Kurvensteuerung sowie des Halteelementes wird vorgeschlagen, daß die Rollen von einem Kopplungselement miteinander verbunden sind.

Eine exakte Positionierung wird insbesondere dadurch unterstützt, daß das Kopplungselement als ein Zahnriemen ausgebildet ist.

Zur Unterstützung einer modular aufgebauten Konstruktion wird vorgeschlagen, daß der Tragarm über eine Kupplung mit einem Sockelelement verbunden ist.

Eine einfach zu steuernde und schonende Fixierung der Behälter im Bereich des Halteelementes kann dadurch realisiert werden, daß das Halteelement einen Bodenadapter für den Behälter aufweist, der mit einer an einen Behälterboden angepaßten Gestaltung versehen ist.

Eine weitere Verbesserung der Positionierbarkeit der Behälter kann dadurch erfolgen, daß das Halteelement im wesentlichen parallel zur Mittellinie des Übergaberades positionierbar angeordnet ist.

Zur weiteren Erleichterung einer kompakten Ausführungsform wird vorgeschlagen, daß zur Positionierung des Halteelementes das Sockelelement entlang einer Führung positionierbar angeordnet ist.

Zur Gewährleistung eines exakt reproduzierbaren Bewegungsablaufes wird vorgeschlagen, daß das Sockelelement mit einer Kurvensteuerung gekoppelt ist.

Eine mechanisch besonders robuste Positionierbarkeit wird dadurch unterstützt, daß das Sockelelement schlittenartig entlang der Führung verschieblich ist.

Zur Ableitung einer Hubbewegung von einer Rotationsbewegung erweist es sich als zweckmäßig, daß die Kurvensteuerung für das Sockelelement eine Mantelkurve umfaßt, die im Bereich eines Kurvenelementes des Übergaberades angeordnet ist.

Eine weitere Möglichkeit zur Erzielung einer kompakten Konstruktion besteht darin, daß das Kurvenelement in Richtung der Mittellinie oberhalb des Übergaberades angeordnet ist.

Zur Verminderung der Anzahl der benötigten Bauelemente wird vorgeschlagen, daß das Kurvenelement sowohl mit der Kurvenbahn für die im Bereich des Tragarmes gelagerte Führungsrolle als auch mit der Mantelkurve versehen ist.

Eine Durchführung der vorgegebenen Bewegungen mit geringen Toleranzen wird dadurch unterstützt, daß das Übergaberad gegenüber einem Führungszapfen des Kurvenelementes rotationsfähig gelagert ist.

Eine bevorzugte Ausführungsform besteht darin, daß das Übergaberad zwischen einem Blasrad und einer Ausgabestrecke einer Einrichtung zur Blasverformung von Vorformlingen in Behälter angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine teilweise geschnittene Seitenansicht eines Übergaberades mit gehaltertem Behälter und
- Fig. 6: eine teilweise geschnittene Draufsicht gemäß Blickrichtung VI in Fig. 5.

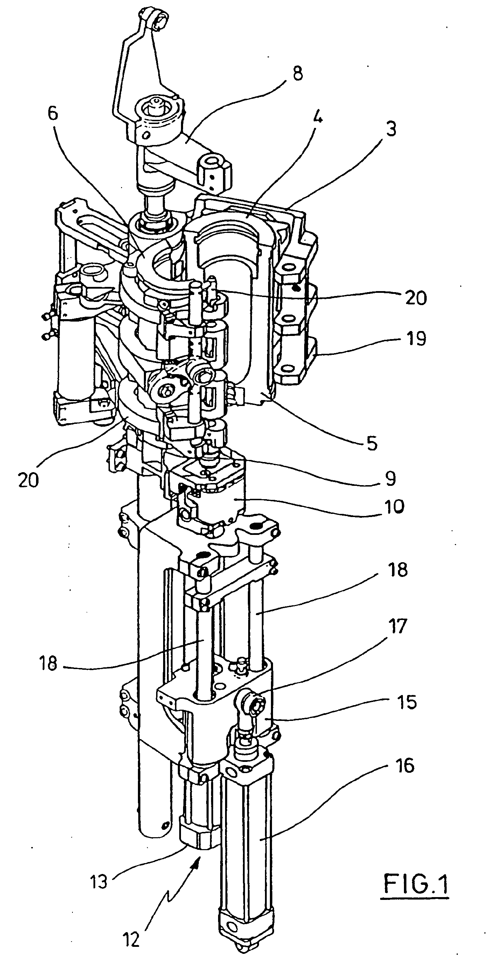

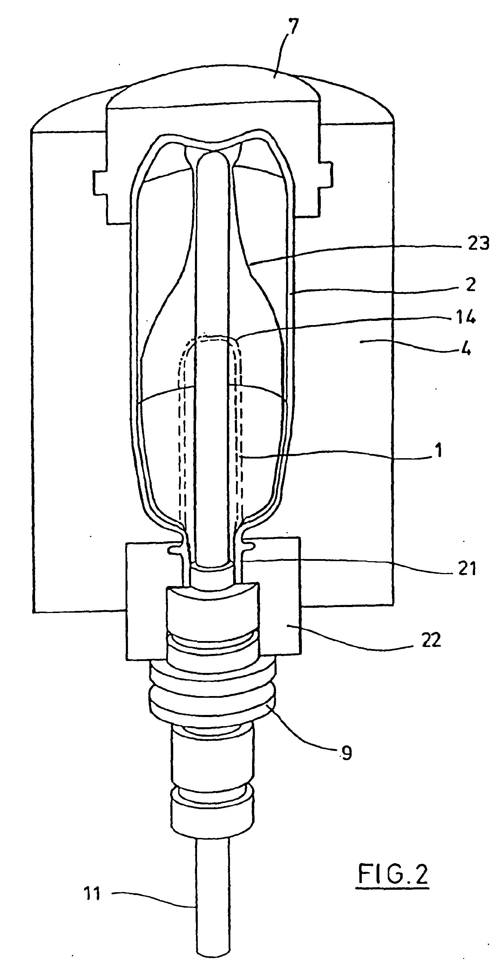

Eine Verwendung der Vorrichtung zur Handhabung von Behältern kann beispielsweise zur Übergabe von geblasenen Behältern (2) bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

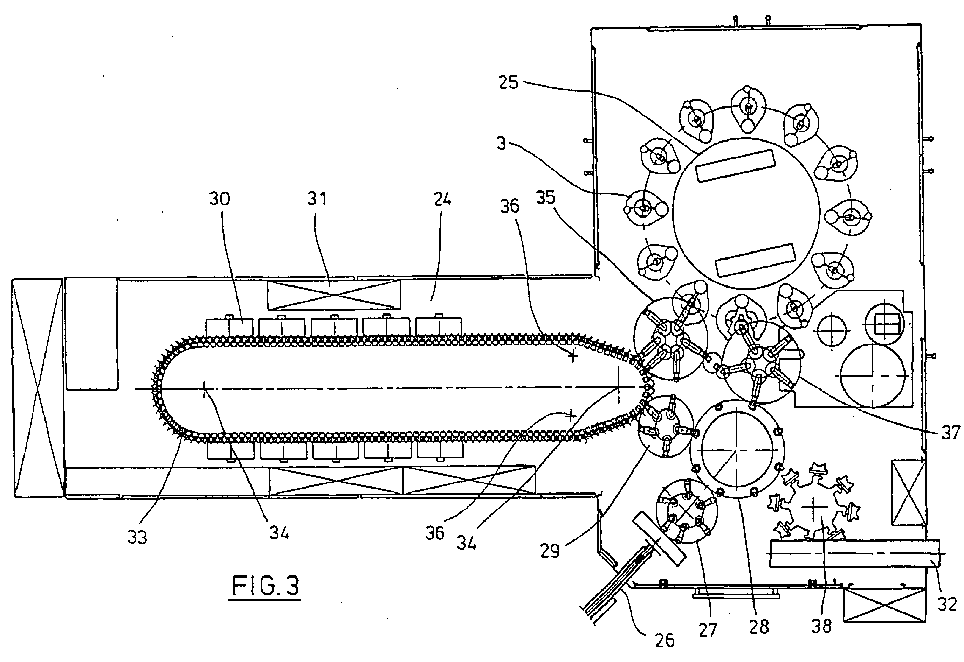

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

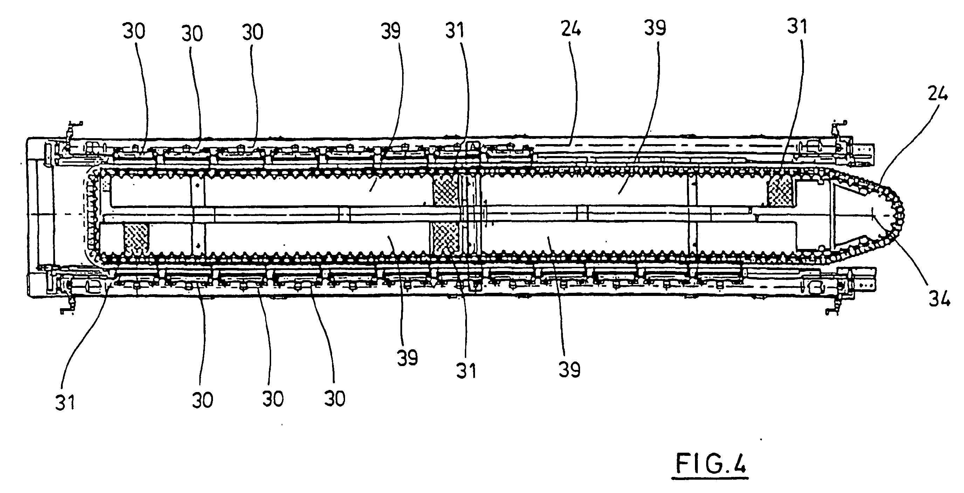

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

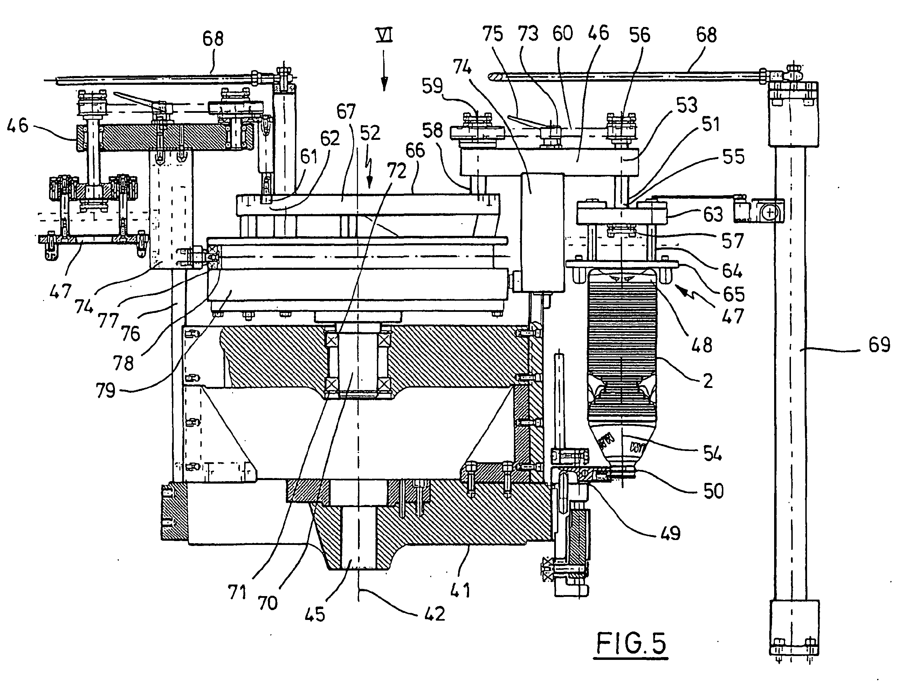

Fig. 5 zeigt ein Übergaberad (41) für geblasene Behälter (2), das relativ zu einer Mittellinie (42) rotationsfähig gelagert ist. Die rotationsfähige Lagerung kann derart realisiert sein, daß das Übergaberad (41) über Lager relativ zu einer Welle (45) geführt ist.

Außenseitig am Übergaberad (41) sind Tragarme (46) angeordnet, die mit Halteelementen (47) für die Behälter (2) versehen sind. Beim dargestellten Ausführungsbeispiel beaufschlagen die Haltelemente (47) den Behälter (82) im Bereich eines Behälterbodens (48). Eine weitere Abstützung der Behälter (2) kann durch Stützelemente (49) erfolgen, die ebenfalls außenseitig am Übergaberad (41) angebracht sind und die den Behälter (2) im Bereich seines Mündungsabschnittes (50) beaufschlagen.

Das Halteelement (47) ist relativ zum Tragarm (46) drehbeweglich angeordnet und mit einem Positionierelement (51) verbunden, das von einer Kurvensteuerung (52) verstellbar ist. Eine Drehachse (53) des Halteelementes (47) verläuft im wesentlichen in Richtung einer Behälterlängsachse (54) des Behälters (2).

Bei der in Fig. 5 dargestellten Ausführungsform ist das Positionierelement (51) mit einer Welle (55) versehen, die im Bereich ihrer dem Halteelement (47) abgewandten Ausdehnung eine Rolle (56) trägt und die relativ zum Tragarm (46) rotationsfähig gelagert ist. Im Bereich des Halteelementes (47) kann ein Endstück (57) der Welle (55) mit dem Halteelement (47) verschraubt sein.

Der Tragarm (46) haltert ebenfalls eine Welle (58), die eine Rolle (59) trägt. Die Rollen (56, 59) sind über ein Kopplungselement (60) miteinander verbunden. Das Kopplungselement (60) kann beispielsweise als ein Zahnriemen ausgeführt sein. Im Bereich ihrer der Rolle (59) abgewandten Ausdehnung weist die Welle (58) eine Führungsrolle (51) auf, die in eine Kurvenbahn (62) der Kurvensteuerung (52) eingreift. Durch das Zusammenwirken der Führungsrolle (61) und der Kurvenbahn (52) wird eine Drehbewegung der Rolle (59) verursacht, die über das Kopplungselement (60) auf die Rolle (56) und hierdurch auf das Halteelement (47) übertragen wird.

Das Haltelement (47) besteht bei der in Fig. 5 dargestellten Ausführungsform aus einem direkt mit der Welle (55) verbundenen Basiselement (63), das über Distanzstücke (64) seinerseits mit einem Bodenadapter (65) verbunden ist, der unmittelbar den Behälterboden (48) beaufschlagt. Diese Konstruktion des Halteelementes (47) ermöglicht es, bei unterschiedlichen Konturen von Behälterböden (48) den wesentlichen Teil des Halteelementes (47) unverändert zu lassen und lediglich den produktspezifischen Bodenadapter (65) auszutauschen.

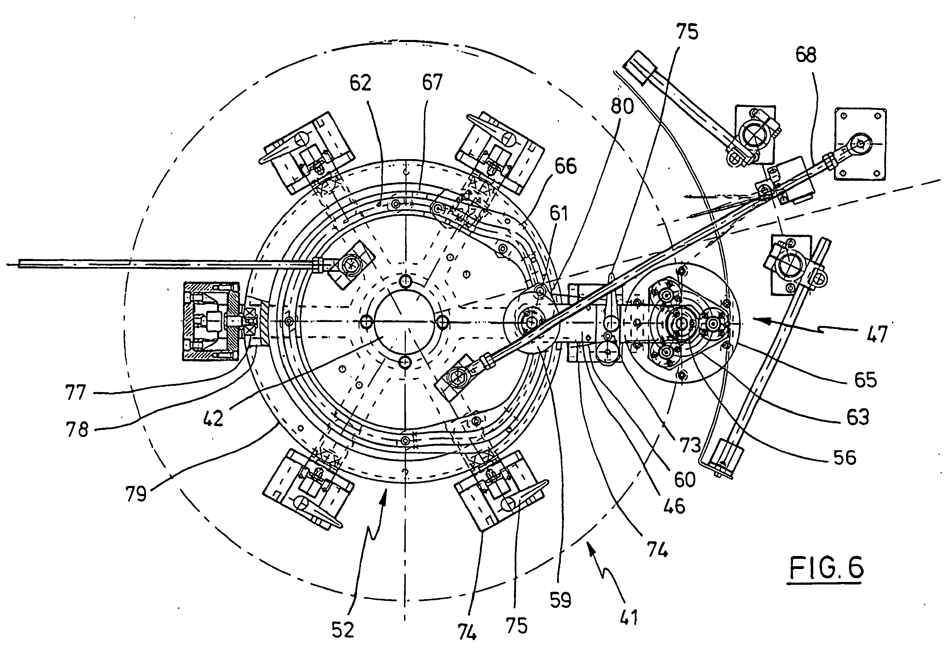

Insbesondere ist daran gedacht, den Bodenadapter (65) im Bereich seiner dem Behälterboden (48) zugewandten Ausdehnung mit einer Kontur zu versehen, die zumindest im wesentlichen der Kontur des Behälterbodens (48) entspricht. Bei der in Fig. 5 und Fig. 6 dargestellten Ausführungsform, bei der der Behälter (2) vom Stützelement (49) abgefangen ist, kann hierdurch nach einem Absenken des Bodenadapters (65) in einfacher weise ein Formschluß zwischen dem Bodenadapter (65) und dem Behälterboden (48) erreicht werden, so daß eine Drehung des Bodenadapters (65) unmittelbar und spielfrei in eine Drehung des Behälters (2) um dessen Behälterlängsachse (54) umgesetzt wird.

Die Kurvenbahn (62) ist im Bereich einer oberen Begrenzungsfläche (66) eines Kurvenelementes (67) der Kurvensteuerung (52) angeordnet. Das Kurvenelement (67) ist über Gestänge (68) mit ortsfest angeordneten Fixierelementen (69) verbunden. Hierdurch erfolgt eine räumlich unbewegliche Positionierung des Kurvenelementes (67). Das Kurvenelement (67) greift mit einem Führungszapfen (70) in das Übergaberad (41) ein. Relativ zum Führungszapfen (70) ist das Übergaberad (41) drehbeweglich von Lagern (71, 72) geführt. Die Lager (71, 72) können beispielsweise als Kugellager oder Rollenlager realisiert sein. Die Anordnung der Lager (71, 72) sowie die Positionierung des Führungszapfens (70) erfolgt im wesentlichen rotationssymmetrisch zur Mittellinie (42).

Der Tragarm (46) ist über eine Kupplung (73) mit einem Sockelelement (74) verbunden. Die Kupplung (73) kann beispielsweise als eine Schnellkupplung mit Bedienungshebel (75) realisiert sein. Das Sockelelement (74) ist im wesentlichen parallel zur Mittellinie (42) entlang einer Führung (76) verschieblich. Eine Positionierung des Sockelelementes (74) entlang der Führung (76) kann über eine Kurvenrolle (77) erfolgen, die in eine als Nut ausgebildete Mantelkurve (78) eingreift. Die Mantelkurve (78) ist im Bereich einer Seitenwandung (79) des Kurvenelementes (67) angeordnet. Durch die Hubbewegung des Sockelelementes (74) wird aufgrund der Kopplung mit dem Tragarm (46) auch das Halteelement (47) mit dem Behälter (2) angehoben bzw. abgesenkt. Hierdurch kann z.B. ein Abnehmen des Behälters (2) von einem nicht dargestellten Transportdorn durchgeführt werden.

Der Aufbau der Vorrichtung wird durch die Draufsicht in Fig. 6 noch weiter veranschaulicht. Insbesondere ist zu erkennen, daß die Führungsrolle (61) exzentrisch zu einer Mittellinie der Rolle (59) angeordnet ist. Die Führungsrolle (61) ist dabei drehbeweglich in einem Stellarm (80) gelagert, der seinerseits starr mit der Rolle (59) gekoppelt ist. Durch die Bewegung der Führungsrolle (61) entlang der Kurvenbahn (62) wird hierdurch eine Schwenkbewegung des Stellarmes (80) und dadurch gleichzeitig auch eine Drehbewegung der Rolle (59) hervorgerufen. Durch die Kopplung der Rolle (61) mit der Rolle (56) über das Kopplungselement (60) sowie eine entsprechende Übersetzung bei der Kopplung kann hierdurch eine entsprechend hin und zurück durchgeführte Drehbewegung der Rolle (59) in die zu erzeugende Drehbewegung des Behälters (2) relativ zu seiner Längsachse (54) transformiert werden.

Eine typische Transformation der Bewegungsabläufe erfolgt derart, daß der Behälter (2) relativ zu seiner Behälterlängsachse (54) um 90° verschwenkt wird. In Abhängigkeit von der Geometrie des Behälters (2) lassen sich aber auch beliebige andere Übersetzungsverhältnisse und damit auch Drehwinkelbereiche realisieren.

## Patentansprüche

1. Vorrichtung zur Handhabung von Behältern (2), die ein rotationsfähiges Übergaberad (41) aufweist, das mindestens einen relativ zu einem Mittelpunkt des Übergaberades (41) im wesentlichen radial angeordneten Tragarm (46) aufweist, der mit einem Halteelement (47) für die Behälter (2) versehen ist und bei der das Halteelement (47) relativ zum Tragarm (46) um eine Drehachse (53) herum drehbeweglich angeordnet ist sowie bei der das Halteelement (47) mit einem Positionierelement (51) verbunden ist, das von einer Kurvensteuerung (52) verstellbar ist, **dadurch gekennzeichnet, daß** die Drehachse (53) im wesentlichen in Richtung einer Behälterlängsachse (54) eines vom Halteelement (47) getragenen Behälters (2) angeordnet ist, daß ein mit dem Tragarm (46) verbundenes Sockelelement (74) als Schlitten entlang einer Führung (76) verschieblich ist und daß das Sockelelement (74) mit einer Kurvensteuerung gekoppelt ist.

2. Vorrichtung nach Anspruch 1, **dadurch gekennzeichnet, daß** die Kurvensteuerung des Positionierelementes (52) relativ zu einer Anordnung des Halteelementes (47) bezüglich der Mittellinie (42) radial innenliegend angeordnet ist.

3. Vorrichtung nach Anspruch 1 oder 2, **dadurch gekennzeichnet, daß** die Kurvensteuerung des Positionierelementes (52) mindestens eine Führungsrolle (61) umfaßt, die in eine Kurvenbahn (62) eingreift.

4. Vorrichtung nach einem der Ansprüche 1 bis 3, **dadurch gekennzeichnet, daß** die Führungsrolle (61) mit einer zweiten Rolle (59) verbunden ist, die drehbar im Bereich des Tragarmes (46) gelagert ist.

5. Vorrichtung nach einem der Ansprüche 1 bis 4, **dadurch gekennzeichnet, daß** das Positionierelement (51) eine Rolle (56) aufweist.

6. Vorrichtung nach Anspruch 5, **dadurch gekennzeichnet, daß** die Rolle (56) des Positionierelementes (51) über eine Welle (55) mit dem Halteelement (47) gekoppelt ist.

7. Vorrichtung nach einem der Ansprüche 1 bis 6, **dadurch gekennzeichnet, daß** die Rollen (56, 59) von einem Kopplungselement (60) miteinander verbunden sind.

8. Vorrichtung nach Anspruch 7, **dadurch gekennzeichnet, daß** das Kopplungselement (60) als ein zahnriemen ausgebildet ist.

9. Vorrichtung nach einem der Ansprüche 1 bis 8, **dadurch gekennzeichnet, daß** der Tragarm (46) über eine Kupplung (73) mit einem Sockelelement (74) verbunden ist.

10. Vorrichtung nach einem der Ansprüche 1 bis 9, **dadurch gekennzeichnet, daß** das Halteelement (47) einen Bodenadapter (65) für den Behälter (82) aufweist, der mit einer an einen Behälterboden (48) angepaßten Gestaltung versehen ist.

11. Vorrichtung nach einem der Ansprüche 1 bis 10, **dadurch gekennzeichnet, daß** das Halteelement (47) im wesentlichen parallel zur Mittellinie (42) des Übergaberades (41) positionierbar angeordnet ist.

12. Vorrichtung nach einem der Ansprüche 1 bis 11, **dadurch gekennzeichnet, daß** zur Positionierung des Haltelementes (47) das Sockelelement (74) entlang einer Führung (76) positionierbar angeordnet ist.

13. Vorrichtung nach einem der Ansprüche 1 bis 12, **dadurch gekennzeichnet, daß** die Kurvensteuerung für das Sockelelement (74) eine Mantelkurve (78) umfaßt, die im Bereich eines Kurvenelementes (67) der Kurvensteuerung des Übergaberades (41) angeordnet ist.

14. Vorrichtung nach einem der Ansprüche 1 bis 13, **dadurch gekennzeichnet, daß** das Kurvenelement (67) in Richtung der Mittellinie (42) oberhalb des Übergaberades (41) angeordnet ist.

15. Vorrichtung nach einem der Ansprüche 1 bis 14, **dadurch gekennzeichnet, daß** das Kurvenelement (67) sowohl mit der Kurvenbahn (62) für die im Bereich des Tragarmes (46) gelagerte Führungsrolle (61) als auch mit der Mantelkurve (78) versehen ist.

16. Vorrichtung nach einem der Ansprüche 1 bis 15, **dadurch gekennzeichnet, daß** das Übergaberad (41) gegenüber einem Führungszapfen (70) des Kurvenelementes (67) rotationsfähig gelagert ist.

17. Vorrichtung nach einem der Ansprüche 1 bis 16, **dadurch gekennzeichnet, daß** das Übergaberad (41) zwischen einem Blasrad (259 und einer Ausgabestrecke (32) einer Einrichtung zur Blasverformung von Vorformlingen (1) in Behälter (2) angeordnet ist.

## Claims

1. Device for handling containers (2), having a rotatable transfer wheel (41) with at least one support arm (46) disposed essentially radially relative to a centre point of the transfer wheel (41) and provided with a retaining element (47) for the containers (2), which retaining element (47) is disposed so as to be displaceable in rotation relative to the support arm (46) about a rotation axis (53), the retaining element (47) being connected to a positioning element (51) which is displaceable by means of a cam control (52), **characterised in that** the rotation axis (53) is disposed essentially in the direction of a container axis (54) of a container (2) borne by the retaining element (47), a base element (74) connected to the support arm (46) is displaceable along a guide (76) in the manner of a carriage and the base element (74) is coupled with a cam control.

2. Device as claimed in claim 1, **characterised in that** the cam control (52) of the positioning element is disposed radially inwards with respect to the centre line (42) relative to a disposition of the retaining element (47).

3. Device as claimed in claim 1 or 2, **characterised in that** the cam control (52) of the positioning element has a guide roller (61) which engages in a cam track (62).

4. Device as claimed in one of claims 1 to 3, **characterised in that** the guide roller (61) is connected to a second roller (59) which is mounted so as to be rotatable in the region of the support arm (46).

5. Device as claimed in one of claims 1 to 4, **characterised in that** the positioning element (51) has a roller (56).

6. Device as claimed in claim 5, **characterised in that** the roller (56) of the positioning element (51) is coupled with the retaining element (47) by means of a shaft (55).

7. Device as claimed in one of claims 1 to 6, **characterised in that** the rollers (56, 59) are connected to one another by a coupling element (60).

8. Device as claimed in claim 7, **characterised in that** the coupling element (60) is provided in the form of a toothed belt.

9. Device as claimed in one of claims 1 to 8, **characterised in that** the support arm (46) is connected to a base element (74) by means of a clutch (73).

10. Device as claimed in one of claims 1 to 9, **characterised in that** the retaining element (47) has a base adapter (65) for the container (82), the shape of which is adapted to a container base (48).

11. Device as claimed in one of claims 1 to 10, **characterised in that** the retaining element (47) is disposed so that it can be positioned essentially parallel with the centre line (42) of the transfer wheel (41).

12. Device as claimed in one of claims 1 to 11, **characterised in that** the base element (74) is disposed so that it can be positioned along a guide (76) in order to position the retaining element (47).

13. Device as claimed in one of claims 1 to 12, **characterised in that** the cam control for the base element (74) has a barrel cam (78) disposed in the region of a cam element (67) of the cam control of the transfer wheel (41).

14. Device as claimed in one of claims 1 to 13, **characterised in that** the cam element (67) is disposed above the transfer wheel (41) in the direction of the centre line (42).

15. Device as claimed in one of claims 1 to 14, **characterised in that** the cam element (67) is provided with both the cam track (62) for the guide roller (61) mounted in the region of the support arm (46) as well as the barrel cam (78).

16. Device as claimed in one of claims 1 to 15, **characterised in that** the transfer wheel (41) is mounted so as to be rotatable relative to a guide pin (70) of the cam element (67).

17. Device as claimed in one of claims 1 to 16, **characterised in that** the transfer wheel (41) is disposed between a blowing wheel (25) and an output line (32) of a unit for blow-moulding preforms (1) into containers (2).

## Revendications

1. Dispositif de manutention de récipients (2), qui présente une roue de transfert (41) susceptible de rotation, qui présente au moins un bras de support (46) disposé sensiblement radialement par rapport à un centre de la roue de transfert (41), lequel est pourvu d'un organe de maintien (47) pour les récipients (2) et dans lequel l'organe de maintien (47) est agencé mobile à rotation autour d'un axe de rotation (53), par rapport au bras de support (46), de même que dans lequel l'organe de maintien (47) est relié à un organe de positionnement (51) ajustable par une commande à came (52), **caractérisé en ce que** l'axe de rotation (53) est disposé sensiblement dans la direction d'un axe longitudinal (54) de récipient, d'un récipient (2) porté par le bras de support (47), **en ce qu'**un socle (74) relié au bras de support (46) est mobile comme un chariot le long d'un guide (76), et **en ce que** le socle (74) est couplé à une commande à came.

2. Dispositif selon la revendication 1, **caractérisé en ce que** la commande à came (52) de l'organe de positionnement est disposée radialement vers l'intérieur par rapport à une disposition de l'organe de maintien (47) par rapport à l'axe (42).

3. Dispositif selon la revendication 1 ou 2, **caractérisé en ce que** la commande à came (52) de l'organe de positionnement comprend au moins un galet de guidage (61) qui s'engage dans un chemin de came (62).

4. Dispositif selon l'une des revendications 1 à 3, **caractérisé en ce que** le galet de guidage (61) est relié à un second galet (59) monté à rotation dans la région du bras de support (46)

5. Dispositif selon l'une des revendications 1 à 4, **caractérisé en ce que** l'organe de positionnement (51) comprend un galet (56).

6. Dispositif selon la revendication 5, **caractérisé en ce que** le galet (56) de l'organe de positionnement (51) est accouplé à l'organe de maintien (47) par l'intermédiaire d'un arbre (55).

7. Dispositif selon l'une des revendications 1 à 6, **caractérisé en ce que** les galets (56, 59) sont reliés ensemble par un organe d'accouplement (60).

8. Dispositif selon la revendication 7, **caractérisé en ce que** l'organe d'accouplement (60) est réalisé sous la forme d'une courroie crantée.

9. Dispositif selon l'une des revendications 1 à 8, **caractérisé en ce que** le bras de support (46) est relié à un socle (74) par l'intermédiaire d'un accouplement (73).

10. Dispositif selon l'une des revendications 1 à 9, **caractérisé en ce que** l'organe de maintien (47) comprend un adaptateur de fond (65) pour le récipient (82), qui est pourvu d'une conformation adaptée à un fond de récipient (48).

11. Dispositif selon l'une des revendications 1 à 10, **caractérisé en ce que** l'organe de maintien (47) est agencé de manière positionnable sensiblement parallèlement à l'axe central (42) de la roue de transfert (41).

12. Dispositif selon l'une des revendications 1 à 11, **caractérisé en ce que** le socle (74) est agencé de manière à pouvoir être positionné le long d'un guide (76), pour le positionnement de l'organe de maintien (47).

13. Dispositif selon l'une des revendications 1 à 12, **caractérisé en ce que** la commande à came pour le socle (74) comprend une came axiale (78) qui est agencée dans la région d'une came (67) de la commande à came de la roue de transfert (41).

14. Dispositif selon l'une des revendications 1 à 13, **caractérisé en ce que** la came (67) est agencée au dessus de la roue de transfert (41), dans la direction de l'axe (42).

15. Dispositif selon l'une des revendications 1 à 14, **caractérisé en ce que** la came (67) est pourvue aussi bien du chemin de came (62) pour le galet de guidage (61) monté dans la région du bras de support (46), que de la came axiale (78).

16. Dispositif selon l'une des revendications 1 à 15, **caractérisé en ce que** la roue de transfert (41) est montée à rotation vis-à-vis d'une broche de guidage (70) de la came (67).

17. Dispositif selon l'une des revendications 1 à 16, **caractérisé en ce que** la roue de transfert (41) est agencée entre une roue de soufflage (25) et une ligne de distribution (32) d'un dispositif de soufflage de préformes (1) en récipients (2).
